# EUROPÄISCHE PATENTSCHRIFT

(11) **EP 2 730 821 B1**
(45) Veröffentlichungstag und Bekanntmachung des Hinweises auf die Patenterteilung: **22.02.2017**
(21) Anmeldenummer: 13192044.9
(22) Anmeldetag: 08.11.2013
(51) Int. Cl.: F16J 15/46

(54) **Vorrichtung und Verfahren zum Abdichten eines Maschinenteils gegenüber einem zweiten Maschinenteil**
Device and method for sealing a machine part relative to a second machine part
Dispositif et procédé d'isolation étanche d'une pièce de machine par rapport à une deuxième pièce de machine

(30) Priorität: 09.11.2012 DE 102012110752
(43) Veröffentlichungstag der Anmeldung: 14.05.2014
(73) Patentinhaber: Krones AG, 93073 Neutraubling (DE)
(72) Erfinder: Braun, Franz, 93073 Neutraubling (DE); Schwarzfischer, Peter, 93073 Neutraubling (DE)
(74) Vertreter: Nordmeyer, Philipp Werner

(56) Entgegenhaltungen:
- EP-A2- 1 147 925
- DE-A1- 2 811 196
- DE-A1-102004 034 208
- DE-A1-102009 014 214

## Beschreibung

### Technisches Gebiet

Die vorliegende Erfindung betrifft eine Vorrichtung zum Abdichten eines ersten Maschinenteils gegenüber einem zweiten Maschinenteil in einer Getränkeabfüllanlage, sowie ein Verfahren zum Abdichten eines ersten Maschinenteils gegenüber einem zweiten Maschinenteil in einer Getränkeabfüllanlage.

### Stand der Technik

Bei Rundläufermaschinen im Bereich der Getränkeabfüllung, beispielsweise Rundläuferfüllern, Rundläufersterilisatoren oder Rundläuferrinsern, ist es notwendig, von stehenden Anlagenkomponenten, beispielsweise einem Maschinengestell, Fluide auf gegenüber den stehenden Anlagenkomponenten rotierende Anlagenkomponenten zu übertragen. Hierzu sind Dichtungen bekannt, welche einen ersten stationären Maschinenteil gegenüber einem zweiten, sich gegenüber dem ersten Maschinenteil bewegenden Maschinenteil abdichten. Insbesondere sind Rotationsdichtungen bekannt, mittels welchen beispielsweise eine Abdichtung einer sich auf einer stationären Welle drehenden Hülse bereitgestellt wird.

Aus dem Stand der Technik sind viele unterschiedliche Dichtungsarten bekannt, beispielsweise Dichtungen, bei welchen ein Dichtelement mittels eines Elastomers von einem ersten Maschinenteil auf ein zweites Maschinenteil hin vorgespannt ist. Auch federvorgespannte Dichtelemente sind bekannt, bei welchen eine Vorspannkraft mittels einer Feder auf das jeweilige Dichtelement aufgebracht wird. Eine Vorspannkraft kann auch durch die eigentliche Form von eingespannten Dichtlippen erzeugt werden.

Hydraulisch und pneumatisch vorspannbare Dichtungen sind aus der DE 1 918 804 A bekannt. Hier wird ein Dichtkörper über ein Expansionselement radial an ein Maschinenteil angepresst, welches zum Aufbringen einer Vorspannung über ein Fluid expandierbar ist.

Auch aus der WO 99/32815 A1 ist eine Dichtvorrichtung bekannt, bei welcher ein Dichtkörper radial über ein expandierbares Gebilde, in welchem sich ein Druckmedium befindet, an ein Maschinenteil anpressbar ist.

Die DE 10 2009 014 214 A1 beschreibt eine Dichtungseinrichtung für eine Drehdurchführung zur Aufnahme eines rotierenden Maschinenelements.

Die DE 28 11 196 A1 beschreibt eine Abdichtung für Wellen, zur Abdichtung gegen flüssige Medien.

Die DE 10 2004 034 208 A1 zeigt Dichtungsmöglichkeiten auf Basis eines Hohlkörpers, Schlauchs oder Rohrs auf, mit Kühlung der Dichtlippe, Heizen der Dichtlippe und Realisierung eines definierten Anpressdrucks.

Die EP 1 147 925 A2 beschreibt eine Dichtungsanordnung mit einem druckabhängig schaltbaren Dichtring, der als Leitungsabschnitt ausgebildet ist und zwei Leitungsenden bedarfsweise dicht miteinander verbindet.

Bei Getränkeabfüllanlagen ist es wesentlich, dass die jeweiligen Vorrichtungen zum Abdichten eine lange Standzeit aufweisen, um die unvermeidbaren Wartungsintervalle möglichst lang zu halten. Weiterhin muss eine zuverlässige Abdichtung unabhängig von den tatsächlich abgefüllten beziehungsweise verarbeiteten Füllprodukten bereitgestellt werden. Da die jeweiligen Füllbeziehungsweise Bearbeitungsmedien bei Getränkeabfüllanlagen bezüglich der aufgebrachten Drücke sowie der Verarbeitungstemperaturen über einen großen Bereich variieren und auf derselben Getränkeabfüllanlage unterschiedliche Füllprodukte abgefüllt werden können, beispielsweise ein erstes Füllprodukt mit einer Kaltabfüllung und ein zweites Füllprodukt mit einer Heißabfüllung, kann durch die vorbekannten Vorrichtungen zur Abdichtung zwar eine zuverlässige Dichtleistung bereitgestellt werden, der Verschleiß der Dichtungen ist jedoch nicht optimiert, da die Vorrichtung auf einen kritischen Druck, insbesondere den höchsten möglichen Druck hin ausgelegt sein muss.

### Darstellung der Erfindung

Entsprechend ist es, ausgehend von dem bekannten Stand der Technik, eine Aufgabe der vorliegenden Erfindung, eine Vorrichtung zum Abdichten eines ersten Maschinenteils gegenüber einem zweiten Maschinenteil bereitzustellen, welche ein verbessertes Verschleißverhalten aufweist.

Diese Aufgabe wird durch eine Vorrichtung mit den Merkmalen des Anspruchs 1 gelöst. Vorteilhafte Weiterbildungen ergeben sich aus den Unteransprüchen.

Entsprechend wird eine Vorrichtung zum Abdichten eines ersten Maschinenteils gegenüber einem zweiten Maschinenteil in einer Getränkeabfüllanlage, bevorzugt zum Abdichten eines Wellendurchganges durch ein Gehäuse, vorgeschlagen, welche eine Dichtung, die an dem ersten Maschinenteil gehalten ist und an dem zweiten Maschinenteil dichtend anlegbar ist, und ein mit einem Fluid beaufschlagbares Vorspannelement zum Aufbringen einer dichtenden Vorspannung auf die Dichtung umfasst. Erfindungsgemäß ist die von dem Vorspannelement auf die Dichtung aufbringbare Vorspannung variierbar.

Zur Variation der Vorspannung ist dazu eine Steuerung vorgesehen, mittels welcher eine entsprechende Beaufschlagung des Vorspannelementes mit dem Fluid angesteuert wird.

Dadurch, dass die von dem Vorspannelement auf die Dichtung aufbringbare Vorspannung variierbar ist, lässt sich für jeden möglichen Betriebszustand der Getränkeabfüllanlage eine optimale Vorspannung für die Dichtung einstellen. Entsprechend kann beispielsweise bei einer Abfüllung eines ersten Produktes, welches im Wesentlichen drucklos abgefüllt wird, eine niedrigere Vorspannung gewählt werden, als bei der Abfüllung eines zweiten Produktes, welches unter höherem Druck abgefüllt wird, beispielsweise der Abfüllung eines kohlensäurehaltigen Produkts. Dadurch kann der Verschleiß der Dichtung im optimalen Bereich gehalten werden. Mit anderen Worten kann auf diese Weise erreicht werden, dass die Dichtung nur in dem absolut notwendigen Maße verschleißt, dabei aber die notwendige Dichtleistung bereitstellt.

Weiterhin kann durch das Aufbringen einer variierbaren Vorspannung ein Reinigungsprozess innerhalb einer Getränkeabfüllanlage unterstützt werden. Bei Getränkeabfüllanlagen ist es wesentlich, eine Reinigungsfähigkeit jeder im Abfüllbereich angeordneten Anlagenkomponenten und insbesondere auch der Dichtungskomponenten so zu ermöglichen, dass die hygienischen Voraussetzungen für eine hygienisch einwandfreie Abfüllung erfüllbar sind. Durch das Aufbringen einer variierbaren Vorspannung kann beim Reinigungsprozess durch eine Absenkung beziehungsweise vollständige Aufhebung der Vorspannung erreicht werden, dass die Dichtung zumindest teilweise von einem Reinigungsmedium unterspült werden kann. Damit werden nicht nur die am zweiten Maschinenteil anliegenden Bereiche der Dichtung selbst reinigbar, sondern es wird auch der zweite Maschinenteil im Bereich der Anlage der Dichtung reinigbar.

In einer besonders bevorzugten Variante ist das Vorspannelement so ausgebildet, dass die auf die Dichtung aufbringbare Vorspannung vollständig lösbar ist, derart, dass die Dichtung vollständig mit einem Reinigungs- beziehungsweise Sterilisationsmedium unterspült werden kann. Auf diese Weise lässt sich die Kontaktstelle, an welcher die Dichtung an das zweite Maschinenteil anliegt, vollständig reinigen beziehungsweise sterilisieren. Nach der durchgeführten Reinigung kann die Dichtung dann über eine entsprechende Beaufschlagung des Vorspannelementes mit dem Fluid wieder dichtend geschlossen werden und auf die für den jeweiligen Betriebszustand erforderliche Vorspannung eingestellt werden.

In einer Weiterbildung kann bei der Durchführung der Reinigung auch ein Vakuum auf das Vorspannelement aufgebracht werden, um die Dichtung aktiv von dem zweiten Maschinenelement abzuheben und eine zuverlässige Durchspülung beziehungsweise Unterspülung zu ermöglichen.

Die Steuerung ist dabei bevorzugt so ausgebildet, dass die Beaufschlagung des Vorspannelementes anhand des Betriebszustandes einer die Vorrichtung umfassenden Anlage, bevorzugt einer Getränkeabfüllanlage, und/oder anhand des Verschleißzustandes der Dichtung und/oder des Vorspannelements durchgeführt wird. Die Steuerung kann dabei beispielsweise die Temperatur und/oder den Druck und/oder die Viskosität des abzufüllenden Füllprodukts berücksichtigen und auf dieser Grundlage eine entsprechende Beaufschlagung des Vorspannelements mit dem Fluid zur Erzeugung einer vorbestimmten Vorspannung ansteuern. Weiterhin kann bei fortschreitendem Verschleiß der Dichtung ebenfalls eine erhöhte Vorspannung aufgebracht werden, um die gleiche Dichtwirkung und Druckbeständigkeit der Dichtung zu erreichen. Auch bei einer abnehmenden Elastizität des Vorspannelements kann die Vorspannung beziehungsweise der über das Fluid aufgebrachte Druck entsprechend angepasst werden. Durch die entsprechende Berücksichtigung dieser Parameter kann der unvermeidliche Verschleiß der Dichtung und/oder des Vorspannelements dahingehend optimiert werden, dass nur die für den jeweiligen Betriebszustand der Getränkeabfüllanlage und Verschleißzustand der Dichtung unbedingt notwendige Vorspannung aufgebaut wird. Ebenso ist möglich, das Vorspannelement derart auszulegen, dass es im Normalfall nicht mit Druck beaufschlagt wird. Erst bei ersten Anzeichen von Undichtigkeit, kann mit einer Druckbeaufschlagung die Anpresskraft erhöht werden, um eine sichere Produktion bis zum anstehenden Dichtungswechsel sicherstellen zu können.

Die Dichtung weist bevorzugt ein verschleißfestes und bevorzugt ein trockenlauffähiges Material auf, besonders bevorzugt ein Teflonmaterial. Entsprechend kann die Dichtung an das zweite Maschinenteil trocken angepresst werden, so dass eine hygienische Dichtung, welche im Bereich der Getränkeabfüllanlagen wesentlich ist, erreicht wird.

In einer weiteren bevorzugten Ausführungsform weist die Dichtung im Querschnitt gesehen eine S-förmige Form auf.

In einer besonders bevorzugten Variante ist die Dichtung einstückig mit dem Vorspannelement ausgebildet, beispielsweise durch ein Aufvulkanisieren des trockenlauffähigen Materials auf das Vorspannelement.

Das Vorspannelement ist bevorzugt in Form eines über das Fluid expandierbares Hohlelement, welches bevorzugt als schlauchförmiges Element ausgeführt ist, ausgebildet, wobei das Vorspannelement seinerseits auch eine Dichtung zwischen dem ersten Maschinenteil und dem zweiten Maschinenteil beziehungsweise dem ersten Maschinenteil und der Dichtung bereitstellen kann.

Durch eine vorteilhafte geometrische Ausgestaltung des Vorspannelements kann auch eine totraumfreie Ausgestaltung der Vorrichtung erreicht werden, was unter hygienischen Gesichtspunkten wünschenswert ist.

Das Vorspannelement kann bevorzugt über ein entsprechendes Ventil, welches sehr bevorzugt über eine Steuerung ansteuerbar ist, entsprechend mit einem Fluid beaufschlagbar sein, um eine Varüerung der auf die Dichtung aufbringbaren Vorspannung bereitzustellen.

In einer besonders bevorzugten Weiterbildung sind zwei im Wesentlichen nebeneinander angeordnete Dichtungen vorgesehen, welche jeweils ein Vorspannelement aufweisen und zwischen welchen ein Spülkanal vorgesehen ist, welcher mit einem Spülmedium beaufschlagbar ist. Die nebeneinander angeordneten Dichtungen sind dabei beispielsweise zur Abdichtung zweier nebeneinander angeordneter Fluidräume vorgesehen. Der zwischen den beiden Dichtungen vorgesehene Spülkanal kann zur Detektion von Leckagen verwendet werden und kann auch zum Durchspülen des zwischen den beiden Dichtungen angeordneten Spülkanals, beispielsweise mit einem Spülmedium, dienen. Weiterhin kann im Prozess des Reinigens beziehungsweise Sterilisierens eine Durchspülung beziehungsweise Unterspülung der Dichtungen erreicht werden, wenn entsprechend die Vorspannung während des Reinigungsprozesses in einem vorgegebenen Maße abgesenkt beziehungsweise vollständig aufgehoben wird und über den Spülkanal ein entsprechendes Spülmedium unter den Dichtungen hindurch gepresst wird. Bevorzugt ist wenigstens ein geeigneter Sensoren im Spülkanal oder in einer aus diesem weiterführenden Fluidableitung angeordnet, um während des Reinigens beziehungsweise Sterilisierens die Unterspülung zu überwachen.

In einer weiteren bevorzugten Ausbildung sind zwei Dichtungen vorgesehen, welche jeweils über ein Vorspannelement mit einer Vorspannung beaufschlagbar sind, wobei die Vorspannungen der beiden Vorspannelemente unterschiedlich einstellbar sind. Die nebeneinander angeordneten Dichtungen sind dabei beispielsweise zur Abdichtung zweier nebeneinander angeordneter Fluidräume vorgesehen. Durch die mit unterschiedlichen Vorspannungen beaufschlagbaren Vorspannelemente kann die Vorspannung an den in dem individuellen Fluidraum vorherrschenden Fluiddruck angepasst werden. Damit kann die Vorspannung der an einen ersten Fluidraum mit einem niedrigeren Druck angrenzenden Dichtung entsprechend niedriger eingestellt werden, als die Vorspannung der Dichtung des benachbarten Fluidraumes, welcher mit einem höheren Druck beaufschlagt ist. Auf diese Weise lässt sich das Verschleißverhalten der Dichtungen je nach dem individuell abzudichtenden Druck optimieren.

In einer weiteren bevorzugten Variante sind zwei nebeneinander angeordnete Dichtungen vorgesehen, welche jeweils über ein Vorspannelement vorspannbar sind, wobei zwischen den beiden Dichtungen ein Abstützungselement vorgesehen ist, welches die Dichtungen in einer vorgegebenen Form hält. Durch das Abstützungselement kann verhindert werden, dass die Dichtungen bei einer Relativbewegung der ersten und zweiten Maschinenteile zueinander in eine nicht dichtende Form gebracht werden. Dies könnte beispielsweise durch das Umklappen einer Dichtlippe vorkommen, wobei ein solches Umklappen durch das Abstützungselement verhindert wird.

Bevorzugt handelt es sich bei dem ersten und zweiten Maschinenteil um gegeneinander rotierende Maschinenteile, beispielsweise um eine Drehdurchführung oder eine Wellendurchführung, oder um gegeneinander translatorisch bewegte Maschinenteile, beispielsweise Kolben oder Ventile. Besonders bevorzugt ist die Drehdurchführung in einem Mediendrehverteiler angeordnet, welcher Medien von einem stillstehenden Medienzulauf auf eine rotierende Medienverteilhülse überträgt.

Die oben beschriebene Aufgabe wird weiterhin durch ein Verfahren mit den Merkmalen des Anspruchs 13 beschrieben. Vorteilhafte Weiterbildungen des Verfahrens ergeben sich aus den Unteransprüchen.

Entsprechend wird in dem Verfahren zum Abdichten eines Maschinenteils gegenüber einem zweiten Maschinenteil in einer Getränkeabfüllanlage eine Dichtung, welche an dem ersten Maschinenteil gehalten ist, an dem zweiten Maschinenteil über eine von einem Fluid beaufschlagten Vorspannelement aufgebrachten Vorspannung dichtend angelegt. Erfindungsgemäß wird die von dem Vorspannelement auf die Dichtung aufgebrachte Vorspannung abhängig von dem Betriebszustand einer die Vorrichtung umfassenden Anlage, bevorzugt einer Getränkeabfüllanlage, und/oder dem Verschleißzustand der Dichtung und/oder des Vorspannelements variiert.

Dadurch, dass die Vorspannung variierbar ausgeführt wird, kann entsprechend die oben beschriebene Anpassung der Dichtleistung an die Betriebszustände sowie den jeweiligen Verschleißgrad der Dichtung und/oder des Vorspannelements erreicht werden.

Zur Reinigung ist es besonders bevorzugt, die über das Vorspannelement aufgebrachte Vorspannung so weit abzusenken, dass die Dichtung mit einem Reinigungs- oder Sterilisationsfluid unterspült werden kann und entsprechend eine vollständige Reinigung auch der Kontaktfläche zwischen der Dichtung und dem zweiten Maschinenteil erreicht werden kann. Bevorzugt wird diese Unterspülung beispielsweise durch wenigstens einen geeigneten im Spülkanal oder in einer aus diesem weiterführenden Fluidableitung angeordneten Sensor während des Reinigens beziehungsweise Sterilisierens überwacht.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Querschnittsdarstellung durch eine Vorrichtung zum Abdichten eines feststehenden Maschinenteils gegen eine Welle in einem ersten Ausführungsbeispiel;
- Figur 2: eine schematische Querschnittsdarstellung einer Vorrichtung zum Abdichten eines Gehäuses gegen eine Welle in einem zweiten Ausführungsbeispiel;
- Figur 3: eine schematische Querschnittsdarstellung einer Kombination aus einem Vorspannelement und einem Dichtelement; und
- Figur 4: eine schematische Querschnittsdarstellung einer Vierlippendichtung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

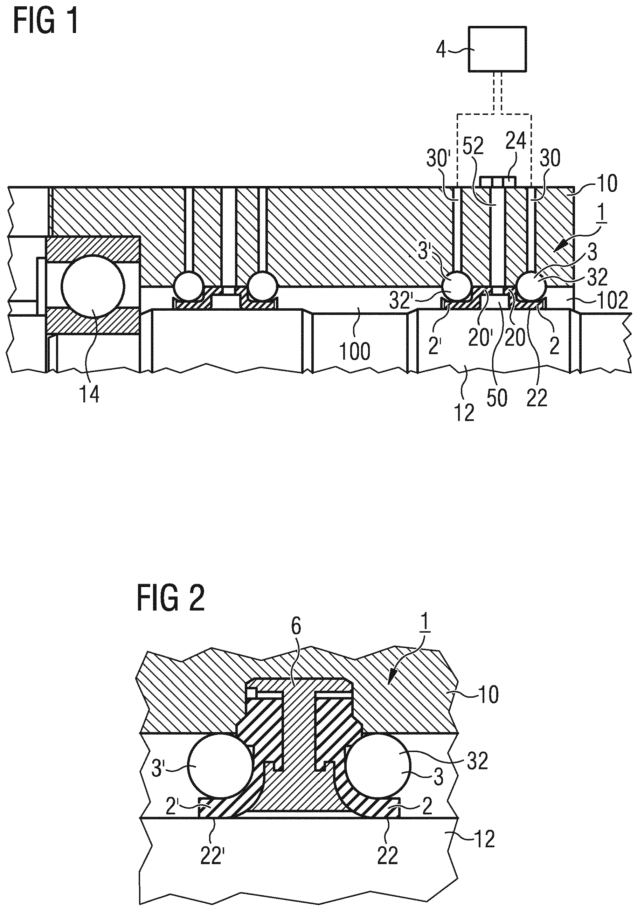

In Figur 1 ist eine Vorrichtung 1 zum Abdichten eines ersten Maschinenteils 10 gegenüber einem zweiten Maschinenteil 12 gezeigt, wobei in Figur 1 der erste Maschinenteil 10 ein Gehäuse ist und der zweite Maschinenteil 12 eine in dem Gehäuse, beispielsweise über das schematisch gezeigte Lager 14, gelagerte Welle ist. Eine solche Anordnung kann beispielsweise bei einem Mediendrehverteiler in einer Getränkeabfüllanlage eingesetzt werden.

Eine Dichtung 2 ist gezeigt, welche an dem ersten Maschinenteil 10 im Haltebereich 20 der Dichtung 2 gehalten ist und welche an dem zweiten Maschinenteil 12 im Anlagebereich 22 der Dichtung 2 dichtend anliegt. Ein mit einem Fluid beaufschlagbares Vorspannmittel 3 in Form eines expandierbaren Schlauches ist zu erkennen, wobei das Vorspannmittel 3 so angeordnet ist, dass es die Dichtung 2 und insbesondere den an dem zweiten Maschinenteil 12 anliegenden Anlagebereich 22 mit einer Vorspannung in Richtung auf den zweiten Maschinenteils 12 hin beaufschlagt. Durch das Einbringen eines Fluids in einen entsprechenden Hohlraum 32 des Vorspannmittels 3 kann die Vorspannung auf die Dichtung 2 in Richtung auf das Maschinenteil 12 hin so aufgebracht werden, dass eine zuverlässige Abdichtung erreicht wird.

Der Hohlraum 32 des Vorspannelements 3 ist über einen Fluidkanal 30 mit einem Fluid so beaufschlagbar, dass die über das Vorspannelement 3 auf die Dichtung 2 aufbringbare Vorspannung variierbar ist. Das über den Fluidkanal 30 in den Hohlraum 32 einbringbare Fluid kann über eine nur schematisch angedeutete Steuervorrichtung 4, welche beispielsweise entweder ein Ventil schaltet, oder welche ein Fluid zur Beaufschlagung des Vorspannelementes 3 mit unterschiedlichen Drücken bereitstellt, entsprechend mit unterschiedlichen Drücken in das Vorspannelement 3 eingebracht werden.

Durch die Steuerung 4 ist es möglich, die Vorspannung, mit welcher die Dichtung 2 und insbesondere der Anlagebereich 22 der Dichtung 2 an dem zweiten Maschinenteil 12 anliegt, zu variieren. Dabei berücksichtigt die Steuerung 4 bevorzugt unterschiedliche Anlagenparameter einer Getränkeabfüllanlage. Beispielsweise kann in einem Füller die Vorspannung so eingestellt werden, dass sie zum einen eine zuverlässige Abdichtung bereitstellt, zum anderen aber den Verschleiß der Dichtung 2 sowie des Vorspannelements 3 so gering wie möglich hält.

Die Steuerung kann dabei die Vorspannung beispielsweise beim Einfüllen eines kalten, im Wesentlichen drucklos abzufüllenden Getränkes, wie beispielsweise einem Milchprodukt, geringer einstellen, als beim Abfüllen eines unter Druck abgefüllten Getränks, wie beispielsweise kohlensäurehaltiges Mineralwasser. Die Dichtleistung ist in beiden Fällen ausreichend, denn es tritt kein Medium beziehungsweise Füllprodukt durch die entsprechenden Dichtungen hindurch. Der Anpressdruck der Dichtung 2 an dem zweiten Maschinenelement 12 ist jedoch jeweils für den individuellen Fall minimal gewählt, so dass der Verschleiß im minimal möglichen Rahmen gehalten werden kann. Je nach Anwendungsfall und Geometrie der Dichtung 2 kann der Anpressdruck dabei aber auch höher gewählt werden.

Weiterhin kann bei der Beaufschlagung des Vorspannelementes 3 mit dem Fluid berücksichtigt werden, wie weit die Dichtung 2, und insbesondere an dem Maschinenelement 12 anliegende der Anlagebereich 22, bereits verschlissen ist. Bei stärkerem Verschleiß wird entsprechend eine stärkere Expansion des Vorspannelementes 3 notwendig sein, um einen adäquaten Druck auf die Dichtung 2 so aufzubringen, dass eine zuverlässige Abdichtung erreicht wird.

Auch eine nachlassende Elastizität des Vorspannelements 3 kann hier berücksichtigt werden und eine entsprechende Anpassung der Beaufschlagung des Vorspannelements 3 mit Fluid durchgeführt werden.

Die Dichtung 2 umfasst bevorzugt ein verschleißfestes und trockenlauffähiges Material, bevorzugt Teflon. Das Vorspannelement 3 ist bevorzugt in Form des in Figur 1 gezeigten schlauchförmigen Gebildes bereitgestellt, welches expandierbar ist.

In dem in Figur 1 gezeigten Ausführungsbeispiel sind eine erste Fluidkammer 100 und eine zweite Fluidkammer 102 über zwei nebeneinander angeordnete Dichtungen 2, 2' gegeneinander abgedichtet und abgegrenzt. Die Dichtung 2' ist gespiegelt zu der Dichtung 2 aufgebaut und weist entsprechend ebenso ein Vorspannelement 3' auf, welches ebenfalls über einen Fluidkanal 30' mit einem Fluid beaufschlagbar ist. Alternativ zu der gezeigten Ausführung, bei welcher die beiden Dichtungen 2, 2' einteilig miteinander verbunden sind, ist ebenso möglich, dass die Dichtungen als separate, nebeneinander angeordnete Dichtungen ausgeführt sind.

Zwischen der ersten Dichtung 2 und der zweiten Dichtung 2' ist ein Spülkanal 50 angeordnet, welcher über eine Spülkanalzuführung 52 mit einem Spülmedium beaufschlagbar ist. Auf den Spülkanal 50 kann in einem weiteren Ausführungsbeispiel auch ein Vakuum aufgebracht werden, so dass die Dichtungsleistung der Dichtungen 2, 2'weiter verbessert wird. Der Spülkanal 50 sowie die Spülkanalzuführung 52 können weiterhin auch zur Leckagedetektion verwendet werden, indem eventuell durch die Dichtungen 2, 2' hindurchtretendes Medium in dem Spülkanal 50 aufgenommen und detektiert wird. Ebenso kann der Spülkanal mit einem Sperrmedium, z.B. Dampf, beaufschlagt werden.

Eine Verdrehsicherung 24 ist vorgesehen, welche dazu dient, eine Verdrehung der trockenlaufenden Dichtungen 2, 2' zu verhindern. Entsprechend ist die Dichtung 2, 2' und insbesondere der Anlagebereich 22 stets richtig orientiert, so dass eine optimale Abdichtung stattfinden kann. Die Verdrehsicherung 24 kann über geeignete Komponenten, wie beispielsweise Stifte oder einen Formschluss, hergestellt werden.

Das Vorspannelement 3 dient weiterhin dazu, die Dichtung 2 gegenüber dem ersten Maschinenteil 10 vollständig abzudichten. Entsprechend hat das Vorspannelement 3, neben der eigentlichen Vorspannfunktion, auch eine abdichtende Funktion. Die Dichtung 2 kann aber auch so ausgebildet sein, dass sie allein die abdichtende Wirkung übernimmt. Die Dichtung 2 ist dann bevorzugt über ihren Haltebereich 20 an dem ersten Maschinenteil 10, an welchem sie fest gehalten ist, fluiddicht montiert.

Das erste Vorspannelement 3 und das zweite Vorspannelement 3' können entweder über die Fluidkanäle 30, 30' mit dem gleichen Druck beaufschlagt werden, oder aber sie können mit unterschiedlichen Drücken beaufschlagt werden. Dies ist beispielsweise dann von Vorteil, wenn in den Fluidkammern 100, 102 Medien mit unterschiedlichen Drücken aufgenommen werden und entsprechend unterschiedliche Dichtleistungen über die Dichtungen 2 und 2' bereitgestellt werden müssen. Auf diese Weise kann der Verschleiß auch einzelner, individueller Dichtungen 2, 2' noch weiter optimiert werden, ohne dass die eigentliche Dichtleistung darunter leiden würde.

Zum Reinigen der in Figur 1 gezeigten Vorrichtung 1 zum Abdichten der Maschinenteile 10, 12 gegeneinander kann zum einen eine herkömmliche Reinigung mit Spülung der Fluidräume 100, 102 durchgeführt werden, wobei üblicherweise auch der Spülkanal 50 mit einem Reinigungsbeziehungsweise Sterilisationsmedium durchspült wird.

In einer bevorzugten Variante kann die Reinigung dahingehend unterstützt werden, dass, beispielsweise über die Steuerung 4, die Vorspannelemente 3, 3' in ihrem Druck so weit reduziert werden oder vollständig drucklos geschaltet werden, dass sich die Dichtungen 2 und insbesondere die Anlagebereiche 22, 22' der Dichtungen 2, 2' von dem zweiten Maschinenteil 12 durch den Druck des Spülmediums abheben lassen. Entsprechend kann dann, beispielsweise durch das Einbringen des Spülmediums durch die Spülkanalzuführung 52 in den Spülkanal 50, ein Unterspülen der Dichtungen 2 vom Spülkanal 50 aus in die beiden angrenzend liegenden Fluidkammern 100, 102 erreicht werden. Auf diese Weise kann ein vollständiges Säubern auch der Kontaktstellen zwischen den Dichtungen 2, 2' und dem zweiten Maschinenteil 12 erreicht werden. Hierdurch lässt sich ein sehr hygienisch ausführbares Abdichten erreichen, da die Reinigung stark vereinfacht ist.

In einer weiteren bevorzugten Variante kann während der Reinigung über die Steuerung 4 auch ein Vakuum auf die Vorspannelemente 3, 3' aufgebracht werden, um ein teilweises oder vollständiges Abheben des Anlagebereichs 22, 22' der Dichtungen 2, 2' von dem zweiten Maschinenteil 12 zu erreichen und damit die Unterspülung der Dichtungen 2, 2' mit dem Reinigungs- und/oder Sterilisationsmedium zu vereinfachen und zu fördern. Auf diese Weise wird auch sichergestellt, dass entlang des gesamten Anlagebereichs 22, 22' eine Unterspülung stattfindet.

Beispielsweise im Spülkanal 50 ist ein Sensor (nicht gezeigt), beispielsweise ein Leitfähigkeitsmesser angeordnet. Dieser erfasst während des Reinigens oder Sterilisierens einen für das Spülmedium charakteristischen Parameter, in diesem Beispiel die Leitfähigkeit, wodurch überwacht werden kann, ob das Spülmedium auch tatsächlich die Dichtungen 2, 2' unterspült hat.

In Figur 2 ist schematisch eine Vorrichtung 1 zum Abdichten eines Maschinenteils 10 gegen ein zweites Maschinenteil 12 in einer weiteren Ausführungsform gezeigt. Es sind wiederum zwei Dichtungen 2, 2' vorgesehen, welche jeweils in einem Anlagebereich 22, 22` an dem zweiten Maschinenteil 12 anliegen, um die eigentliche Abdichtung bereitzustellen. Diese Dichtungen 2, 2' sind wiederum bevorzugt als verschleißarme Dichtungen ausgeführt.

Die Vorspannelemente 3, 3' sind wiederum als im Wesentlichen aufblasbare beziehungsweise mit einem Fluid beaufschlagbare, schlauchförmige Gebilde vorgesehen, und dienen dazu, zum einen eine Vorspannung auf die Dichtung 2, 2` beziehungsweise die Anlagebereiche 22, 22' oder Dichtungen 2, 2` in Richtung auf das zweite Maschinenteil 12 hin auszuüben, und zum anderen eine Abdichtung zwischen der Dichtung 2 und dem Maschinenteil 10 bereitzustellen.

In dem in Figur 2 gezeigten Ausführungsbeispiel ist zwischen den beiden Dichtungen 2, 2' ein Abstützelement 6 vorgesehen, welches die vorgeschriebene Dichtungskontur beziehungsweise die vorgeschriebene Form der Dichtungen nachbildet, derart, dass ein unbeabsichtigtes Umklappen der Dichtungen 2, 2' und insbesondere der Anlagebereiche 22, 22' oder Dichtungen 2, 2' nicht stattfinden kann. Die Dichtungen 2, 2` werden entsprechend stets in der gewünschten Form geführt, so dass ein zuverlässiges und den Spezifikationen konformes Profil der Dichtung 2 bestehen bleibt.

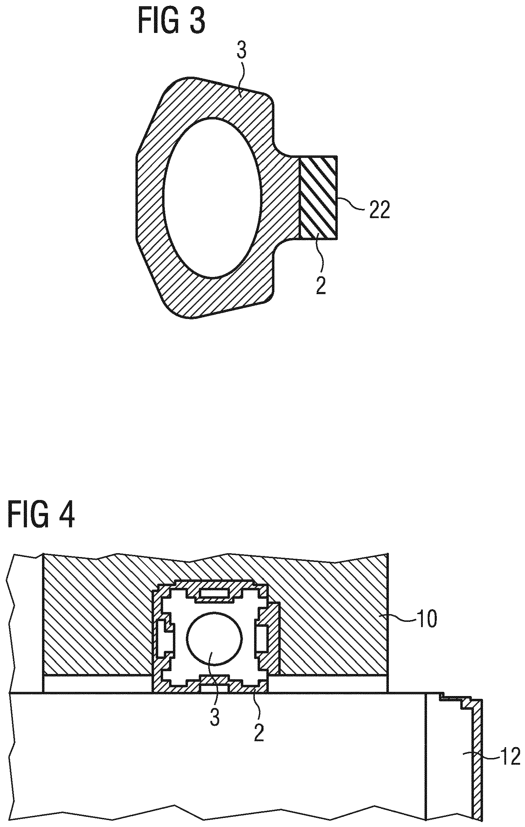

In Figur 3 ist schematisch eine Kombination aus dem Vorspannelement 3 und der Dichtung 2 in einem weiteren schematischen Ausführungsbeispiel gezeigt. In dem in Figur 3 gezeigten Querschnitt ist das Vorspannmittel 3 ein elastisches Material umfassend ausgeführt, und die Dichtung 2 mit dem Anlagebereich 22, welche mit dem zweiten Maschinenteil 12 in Anlage bringbar ist, ist mit dem Vorspannelement 3 fest verbunden. Entsprechend können die Materialien so ausgebildet sein, dass sie die jeweiligen Funktionen gut erfüllen. Das Material der Dichtung 2 ist bevorzugt ein trockenlauffähiges Material, so wie beispielsweise Teflon (PTFE), und das Material des Vorspannelementes 3 ist bevorzugt ein einfach expandierbares Material, welches bei einer Beaufschlagung des Vorspannmittels 3 mit einem Fluid entsprechend expandiert, so dass die Dichtung 2 an dem zweiten Maschinenteil dichtend anliegen kann. In dem in Figur 3 gezeigten Ausführungsbeispiel sind die Dichtung 2 und das Vorspannmittel 3 fest miteinander verbunden, beispielsweise miteinander vulkanisiert.

In Figur 4 ist in einem weiteren exemplarischen Beispiel eine Vierlippendichtung gezeigt, mittels welcher eine Abdichtung zwischen einem ersten Maschinenteil 10 und einem zweiten Maschinenteil 12 vorgenommen werden kann. Die Vierlippendichtung hat entsprechend vier Seiten, mit welchen sie eine Abdichtung vornehmen kann, so dass bei einem Verschleiß einer Seite ein Rotieren um 90° durchgeführt werden kann und dann weiter verwendet werden kann. Auch hier sind ein Vorspannelement 3 und ein Dichtelement 2 vorgesehen, welche hier einstückig miteinander verbunden sind.

Das beschriebene Dichtsystem ist prinzipiell in allen technischen Gebieten und in allen Branchen verwendbar. Besonders vorteilhaft ist es aufgrund der variierbar aufbringbaren Vorspannung jedoch in Bereichen mit stark wechselnden Umgebungsbedingungen und mit besonderen hygienischen Anforderungen einsetzbar, da die vorgeschlagene Vorrichtung zum einen eine variable Einstellung der Dichtungsleistung und damit einen reduzierten Verschleiß bei allen möglichen Umgebungsbedingungen ermöglicht, und zum anderen eine einfache Reinigung möglich ist. Damit ist die vorgeschlagene Vorrichtung 1 besonders bevorzugt im Bereich der Getränkeabfüllanlagen einsetzbar.

Die Dichtungssysteme können entsprechend sowohl zur Abdichtung rotativer Bewegungen, so wie beispielsweise Drehdurchführungen oder Wellenabdichtungen oder zur Abdichtung der einzelnen Verteilerspuren in einem Mediendrehverteiler verwendet werden, als auch zur Abdichtung translatorischer Bewegungen, beispielsweise von Kolben oder Ventilen. Auch in Gleitringdichtungen kann die Erzeugung einer einstellbaren Vorspannkraft beziehungsweise einer variierbaren Vorspannkraft verwendet werden.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Vorrichtung
- 10: erster Maschinenteil
- 12: zweiter Maschinenteil
- 14: Lager
- 100: erste Fluidkammer
- 102: zweite Fluidkammer
- 2: Dichtung
- 20: Haltebereich
- 22: Anlagebereich
- 24: Verdrehsicherung
- 3: Vorspannmittel
- 30: Fluidkanal
- 32: Hohlraum
- 4: Steuervorrichtung
- 50: Spülkanal
- 52: Spülkanalzuführung
- 6: Abstützelement

## Patentansprüche

1. Vorrichtung (1) zum Abdichten eines ersten Maschinenteils (10) gegenüber einem zweiten Maschinenteil (12) in einer Getränkeabfüllanlage, bevorzugt zum Abdichten eines Wellendurchganges durch ein Gehäuse, umfassend eine Dichtung (2), welche an dem ersten Maschinenteil (10) gehalten ist und an dem zweiten Maschinenteil (12) dichtend anlegbar ist, und ein mit einem Fluid beaufschlagbares Vorspannelement (3) zum Aufbringen einer dichtenden Vorspannung auf die Dichtung (2),
**dadurch gekennzeichnet, dass**
die von dem Vorspannelement (3) auf die Dichtung (2) aufbringbare Vorspannung variierbar ist und eine Steuerung (4) zur variierbaren Beaufschlagung des Vorspannelementes (3) mit einem Fluid vorgesehen ist.

2. Vorrichtung (1) gemäß Anspruch 1, **dadurch gekennzeichnet, dass** die Steuerung (4) die Beaufschlagung des Vorspannelementes (3) mit dem Fluid anhand des Betriebszustandes einer die Vorrichtung (1) umfassenden Anlage, bevorzugt einer Getränkeabfüllanlage, und/oder anhand des Verschleißzustandes der Dichtung (2) und/oder des Vorspannelements (3) steuert.

3. Vorrichtung (1) gemäß einem der vorstehenden Ansprüche, **dadurch gekennzeichnet, dass** das das Vorspannelement (3) beaufschlagende Fluid zur Reinigung und/oder Sterilisierung der Vorrichtung im Wesentlichen drucklos schaltbar ist und bevorzugt mit einem Vakuum beaufschlagbar ist, und die Dichtung (2) dann bevorzugt von einem Reinigungsmedium zumindest teilweise unterspülbar ist.

4. Vorrichtung (1) gemäß einem der vorstehenden Ansprüche, **dadurch gekennzeichnet, dass** die Dichtung (2) ein verschleißfestes und bevorzugt trockenlauffähiges Material umfasst, bevorzugt Teflon (PTFE).

5. Vorrichtung (1) gemäß einem der vorstehenden Ansprüche, **dadurch gekennzeichnet, dass** die Dichtung (2) einen S-förmigen Querschnitt aufweist.

6. Vorrichtung (1) gemäß einem der vorstehenden Ansprüche, **dadurch gekennzeichnet, dass** das Vorspannelement (3) ein über das Fluid expandierbares Hohlelement, bevorzugt ein schlauchförmiges Element, umfasst.

7. Vorrichtung (1) gemäß Anspruch 6, **dadurch gekennzeichnet, dass** das Vorspannelement (3) eine Abdichtung zwischen dem ersten Maschinenteil (10) und der Dichtung (2) bereitstellt.

8. Vorrichtung (1) gemäß einem der vorstehenden Ansprüche, **dadurch gekennzeichnet, dass** zwei im Wesentlichen nebeneinander angeordnete Dichtungen (2, 2`) vorgesehen sind, welche jeweils ein Vorspannelement (3, 3') aufweisen und zwischen welchen ein Spülkanal (50) vorgesehen ist, welcher mit einem Spülmedium beaufschlagbar ist.

9. Vorrichtung (1) gemäß einem der vorstehenden Ansprüche, **dadurch gekennzeichnet, dass** zwei Dichtungen (2, 2') vorgesehen sind, welche jeweils über ein Vorspannelement (3, 3') mit einer Vorspannung beaufschlagbar sind und die Vorspannungen der beiden Vorspannelemente (3, 3') unterschiedlich einstellbar sind.

10. Vorrichtung (1) gemäß einem der vorstehenden Ansprüche, **dadurch gekennzeichnet, dass** zwei nebeneinander angeordnete Dichtungen (2, 2') vorgesehen sind, welche jeweils über ein Vorspannelement (3, 3') vorspannbar sind, wobei zwischen den beiden Dichtungen (2, 2') ein Abstützungselement (6) vorgesehen ist, welches die Dichtungen (2, 2') in einer vorgegebenen Form hält.

11. Vorrichtung (1) gemäß einem der vorstehenden Ansprüche, **dadurch gekennzeichnet, dass** das Vorspannelement (3) mit der Dichtung (2) einstückig ausgebildet ist und bevorzugt mindestens zwei unterschiedliche, fest miteinander verbundene Materialien umfasst, wobei mindestens zwei Materialien bevorzugt durch Vulkanisieren fest miteinander verbunden sind.

12. Verfahren zum Abdichten eines Maschinenteils (10) gegenüber einem zweiten Maschinenteil (12) in einer Getränkeabfüllanlage, wobei eine Dichtung (2), welche an dem ersten Maschinenteil (10) gehalten ist, an dem zweiten Maschinenteil (12) über eine von einem Fluid beaufschlagten Vorspannelement (3) aufgebrachte Vorspannung dichtend angelegt wird,
**dadurch gekennzeichnet, dass**
die von dem Vorspannelement (3) auf die Dichtung (2) aufgebrachte Vorspannung abhängig von dem Betriebszustand einer die Vorrichtung (1) umfassenden Anlage, bevorzugt einer Getränkeabfüllanlage, und/oder dem Verschleißzustand der Dichtung (2) und/oder des Vorspannelements (3) variiert wird.

13. Verfahren gemäß Anspruch 12, **dadurch gekennzeichnet, dass** zum Reinigen der Vorrichtung die Vorspannung reduziert wird, aufgehoben wird oder ein Vakuum auf das Vorspannelement (3) aufgebracht wird und die Dichtung (2) mit einem Reinigungsmedium zumindest teilweise unterspült wird.

## Claims

1. Device (1) for sealing a first machine component (10) with respect to a second machine component (12) in a beverage filling installation, preferably for sealing a shaft passage through a housing, comprising a seal (2), which is retained on the first machine component (10) and which can be placed on the second machine component (12) in a sealing manner, and a pretensioning element (3) which can be applied with a fluid for applying a sealing pretensioning to the seal (2),
**characterised in that**
the pretensioning which can be applied by the pretensioning element (3) to the seal (2) can be varied and a control system (4) for applying a fluid to the pretensioning element (3) in a variable manner is provided.

2. Device (1) according to claim 1, **characterised in that** the control system (4) controls the application of the fluid to the pretensioning element (3) with reference to the operating state of an installation which comprises the device (1), preferably a beverage filling installation, and/or with reference to the state of wear of the seal (2) and/or the pretensioning element (3).

3. Device (1) according to either of the preceding claims, **characterised in that** the fluid applied to the pretensioning element (3) can be switched into a substantially pressure-free state for cleaning and/or sterilising the device and can preferably be applied with a vacuum, and the seal (2) can then preferably be at least partially flushed with a cleaning medium.

4. Device (1) according to any one of the preceding claims, **characterised in that** the seal (2) comprises a material which is wear-resistant and which is preferably capable of running dry, preferably Teflon (PTFE).

5. Device (1) according to any one of the preceding claims, **characterised in that** the seal (2) has an S-shaped cross-section.

6. Device (1) according to any one of the preceding claims, **characterised in that** the pretensioning element (3) comprises a hollow element which can be expanded via the fluid, preferably a hose-like element.

7. Device (1) according to claim 6, **characterised in that** the pretensioning element (3) provides a seal between the first machine component (10) and the seal (2).

8. Device (1) according to any one of the preceding claims, **characterised in that** two seals (2, 2') are provided which are arranged substantially adjacent to each other and which each have a pretensioning element (3, 3') and between which a flushing channel (50) is provided which can be applied with a flushing medium.

9. Device (1) according to any one of the preceding claims, **characterised in that** two seals (2, 2') are provided which can each be applied with a pretensioning by means of a pretensioning element (3, 3') and the pretensionings of both pretensioning elements (3, 3') can be adjusted differently.

10. Device (1) according to any one of the preceding claims, **characterised in that** two seals (2, 2') are provided which are arranged beside each other and which can each be pretensioned by means of a pretensioning element (3, 3'), wherein a support element (6) is provided between the two seals (2, 2') which retains the seals (2, 2') in a predetermined shape.

11. Device (1) according to any one of the preceding claims, **characterised in that** the pretensioning element (3) is formed integrally with the seal (2) and preferably comprises at least two different materials which are firmly connected to each other, wherein at least two materials are preferably firmly connected to each other by means of vulcanisation.

12. Method for sealing a machine component (10) with respect to a second machine component (12) in a beverage filling installation, wherein a seal (2) which is retained on the first machine component (10) is placed in a sealing manner on the second machine component (12) by means of a pretensioning which is applied by a pretensioning element (3) which is applied with a fluid,
**characterised in that**
the pretensioning applied to the seal (2) by the pretensioning element (3) is varied in accordance with the operating state of an installation which comprises the device (1), preferably a beverage filling installation, and/or the wear state of the seal (2) and/or the pretensioning element (3).

13. Method according to claim 12, **characterised in that** for cleaning the device, the pretensioning is reduced, cancelled or a vacuum is applied to the pretensioning element (3) and the seal (2) is at least partially flushed with a cleaning medium.

## Revendications

1. Dispositif (1) servant à étanchéifier une première pièce de machine (10) par rapport à une deuxième pièce de machine (12) dans une installation de remplissage de boissons, de manière préférée servant à étanchéifier un passage d'arbre à travers un boîtier, comprenant un joint d'étanchéité (2), qui est maintenu au niveau de la première pièce de machine (10) et qui peut être posé en assurant l'étanchéité au niveau de la deuxième pièce de machine (12), et un élément de précontrainte (3) pouvant être soumis à l'action d'un fluide, servant à appliquer une précontrainte assurant l'étanchéité sur le joint d'étanchéité (2),
**caractérisé en ce que**
la précontrainte pouvant être appliquée par l'élément de précontrainte (3) sur le joint d'étanchéité (2) est variable, et une commande (4) servant à soumettre de manière variable l'élément de précontrainte (3) à l'action d'un fluide est prévue.

2. Dispositif (1) selon la revendication 1, **caractérisé en ce que** la commande (4) commande l'action exercée par le fluide sur l'élément de précontrainte (3) à l'aide de l'état de fonctionnement d'une installation comprenant le dispositif (1), de manière préférée d'une installation de remplissage de boissons, et/ou à l'aide de l'état d'usure du joint d'étanchéité (2) et/ou de l'élément de précontrainte (3).

3. Dispositif (1) selon l'une quelconque des revendications précédentes, **caractérisé en ce que** le fluide exerçant une action sur l'élément de précontrainte (3) peut être activé sensiblement sans pression afin de nettoyer et/ou de stériliser le dispositif et peut être soumis de manière préférée à l'action d'un vide, et le joint d'étanchéité (2) peut être alors au moins en partie submergé de manière préférée par un milieu de nettoyage.

4. Dispositif (1) selon l'une quelconque des revendications précédentes, **caractérisé en ce que** le joint d'étanchéité (2) comprend un matériau résistant à l'usure et de manière préférée adapté au fonctionnement à sec, de manière préférée du Teflon (PTFE).

5. Dispositif (1) selon l'une quelconque des revendications précédentes, **caractérisé en ce que** le joint d'étanchéité (2) présente une section transversale en forme de S.

6. Dispositif (1) selon l'une quelconque des revendications précédentes, **caractérisé en ce que** l'élément de précontrainte (3) comprend un élément creux expansible par l'intermédiaire du fluide, de manière préférée un élément en forme de tuyau flexible.

7. Dispositif (1) selon la revendication 6, **caractérisé en ce que** l'élément de précontrainte (3) fournit une étanchéification entre la première pièce de machine (10) et le joint d'étanchéité (2).

8. Dispositif (1) selon l'une quelconque des revendications précédentes, **caractérisé en ce que** deux joints d'étanchéité (2, 2') disposés sensiblement l'un à côté de l'autre sont prévus, lesquels présentent respectivement un élément de précontrainte (3, 3') et entre lesquels un canal de rinçage (50) est prévu, lequel peut être soumis à l'action d'un milieu de rinçage.

9. Dispositif (1) selon l'une quelconque des revendications précédentes, **caractérisé en ce que** sont prévus deux joints d'étanchéité (2, 2'), qui peuvent être soumis à l'action d'une précontrainte respectivement par l'intermédiaire d'un élément de précontrainte (3, 3'), et les précontraintes des deux éléments de précontrainte (3, 3') peuvent être réglées de manière différente.

10. Dispositif (1) selon l'une quelconque des revendications précédentes, **caractérisé en ce que** deux joints d'étanchéité (2, 2') disposés l'un à côté de l'autre sont prévus, lesquels peuvent être précontraints respectivement par l'intermédiaire d'un élément de précontrainte (3, 3'), dans lequel un élément de soutien (6) est prévu entre les deux joints d'étanchéité (2, 2'), lequel maintient les joints d'étanchéité (2, 2') dans une forme prédéfinie.

11. Dispositif (1) selon l'une quelconque des revendications précédentes, **caractérisé en ce que** l'élément de précontrainte (3) est réalisé d'un seul tenant avec le joint d'étanchéité (2) et comprend de manière préférée au moins deux matériaux différents reliés de manière solidaire les uns aux autres, dans lequel au moins deux matériaux sont reliés de manière solidaire les uns aux autres de manière préférée par vulcanisation.

12. Procédé servant à étanchéifier une pièce de machine (10) par rapport à une deuxième pièce de machine (12) dans une installation de remplissage de boissons, dans lequel un joint d'étanchéité (2), qui est maintenu au niveau de la première pièce de machine (10), est placé au niveau de la deuxième pièce de machine (12) par l'intermédiaire d'une précontrainte appliquée par l'élément de précontrainte (3) soumis à l'action d'un fluide,
**caractérisé en ce que**
la précontrainte appliquée par l'élément de précontrainte (3) sur le joint d'étanchéité (2) varie en fonction de l'état de fonctionnement d'une installation comprenant le dispositif (1), de manière préférée d'une installation de remplissage de boissons, et/ou en fonction de l'état d'usure du joint d'étanchéité (2) et/ou de l'élément de précontrainte (3).

13. Procédé selon la revendication 12, **caractérisé en ce qu'**afin de nettoyer le dispositif, la précontrainte est réduite, annulée ou un vide est appliqué sur l'élément de précontrainte (3), et le joint d'étanchéité (2) est au moins en partie submergé d'un milieu de nettoyage.
